# DEMANDE DE BREVET EUROPEEN

(11) **EP 2 123 511 A1**
(43) Date de publication de la demande: **25.11.2009**
(21) Numéro de dépôt: 09356034.0
(22) Date de dépôt: 13.05.2009
(51) Int. Cl.: B60P 1/43, A61G 3/06

(54) **Dispositif de sécurité pour un caisson de rampe d'accès de véhicule de transport public**

(30) Priorité: 21.05.2008 FR 0802735
(71) Demandeur: Metalic, S. à r.l., 69007 Lyon (FR)
(72) Inventeur: Davanture, Gilles, 69005 Lyon (FR); Salvat, Laurent, 38230 Tignieu-Jameyzieu (FR)
(74) Mandataire: Schmitt, John

(57) **Abrégé**

La présente invention concerne un dispositif de sécurité pour un caisson (4) de rampe d'accès de véhicule de transport placé sous châssis (5) contenant un panneau (1) mobile déployable, le dispositif est **caractérisé en ce qu**'il présente des moyens de déplacement dudit caisson (4) entre deux positions extrêmes, entre une position dite d'utilisation dans laquelle le bord du caisson (4) est positionné à l'extrémité latérale (8) du châssis (5) et entre une position dite de sécurité dans laquelle le caisson (4) est positionné en retrait par rapport au bord du véhicule (3).

## Description

L'invention concerne une rampe d'accès de véhicule public pour des personnes à mobilité réduite.

Afin de faciliter l'accès aux transports publics à des personnes à mobilité réduite, notamment aux usagers en fauteuils roulants, ainsi qu'aux usagers avec poussettes, les véhicules sont équipés de systèmes télescopiques permettant la création d'un plan incliné entre le seuil du véhicule et le trottoir, au niveau d'une porte de véhicule.

Afin de faciliter le déplacement des usagers de ces rampes d'accès vers l'emplacement qui est spécialement aménagé à leur intention, c'est le plus souvent la porte située entre les essieuxqui est équipée de ce dispositif.

La rampe d'accès comporte généralement un panneau mobile déployable entre une position de rangement dans un caisson situé sous le châssis du véhicule et une position d'utilisation inclinée entre le seuil du véhicule et le trottoir de manière à former un pont.

Divers moyens de manoeuvre et dispositifs sont connus pour passer de la position de rangement du panneau mobile dans le caisson à la position d'utilisation après déploiement, de tels moyens sont par exemple décrits dans les documents FR 2 811 223 et FR 2 887 504 de la déposante.

Ce mode de rangement du panneau mobile dans un boîtier sous le véhicule présente de nombreux avantages, le principal étant de ne pas nécessiter de modification lourde du châssis et donc d'être une solution économique pour équiper un véhicule d'une rampe d'accès. Toutefois cette solution présente quelques inconvénients notamment liés à son mode de fixation sous le châssis.

En effet, en raison de ce mode de fixation le caisson contenant le panneau mobile se trouve très près de la chaussée et donc les risques de détérioration consécutifs à des chocs avec les éléments de voirie ou les trottoirs sont plus importants que pour d'autres types de rampe d'accès.

Ce problème déjà identifié précédemment a été partiellement résolu dans le document FR 2 887 504 dans lequel la déposante a proposé un caisson d'épaisseur réduite, toutefois malgré cette amélioration notable il a été constaté sur les véhicules ainsi équipés des détériorations du système à la suite d'accrochages avec des éléments de voirie ou des trottoirs.

Une étude des impacts sur les rampes d'accès accidentées montre que la quasi totalité des chocs se produit soit à l'aplomb de la face latérale du véhicule, ou dans les premiers centimètres les plus proches de la face latérale.

Cependant, afin de permettre le déploiement correct de la rampe d'accès et l'accès aux personnes à mobilité réduite dans le véhicule, il est indispensable que le caisson contenant la rampe mobile soit localisé dans l'extrémité latérale du châssis à l'aplomb de la face latérale du véhicule au moment de son utilisation, c'est à dire dans la zone où un maximum de chocs potentiels a été relevé.

L'invention a donc pour objectif de résoudre cette principale difficulté en proposant un dispositif de positionnement du caisson hors de la zone des chocs potentiels maximum et des moyens pour permettre le déplacement du caisson vers la position de déploiement du panneau mobile à l'aplomb de la face latérale du véhicule sans augmenter l'épaisseur du caisson.

La présente invention concerne ainsi un dispositif de sécurité pour un caisson de rampe d'accès de véhicule de transport placé sous châssis contenant un panneau mobile déployable, le dispositif est **caractérisé en ce qu**'il présente des moyens de déplacement dudit caisson entre deux positions extrêmes, entre une position dite d'utilisation dans laquelle le bord du caisson est positionné à l'extrémité latérale du châssis et entre une position dite de sécurité dans laquelle le caisson est positionné en retrait de la face latérale du véhicule.

L'avantage essentiel du dispositif de sécurité selon l'invention est de réduire les risques de chocs potentiels sur les caissons contenant les rampes d'accès aux véhicule et donc d'améliorer la durée de vie et l'efficience de ces systèmes. Cette amélioration de durée de vie constituant de facto une réduction du coût global du système au cours de son exploitation et une diminution des dépenses d'entretien.

D'autres caractéristiques et avantages de l'invention se dégageront de la description qui va suivre en regard des dessins annexés qui ne sont donnés qu'à titre d'exemples non limitatifs.

La figure 1 est une vue en coupe partielle d'une rampe d'accès à un véhicule de transport en position déployée hors de son caisson.

La figure 2 montre un dispositif possible de guidage du déplacement du caisson.

La figure 3 illustre le caisson en position extrême d'utilisation, en vue de dessous.

La figure 4 illustre le caisson en position extrême de sécurité, en vue de dessous.

L'invention concerne un dispositif de sécurité pour un caisson de rampe d'accès de véhicule de transport, un tel caisson a déjà été décrit, notamment dans les documents FR 2 811 223 et FR 2 887 504 de la déposante. Un tel caisson comporte un panneau mobile entre une position de rangement dans le caisson lorsque le véhicule se déplace et une position d'utilisation lorsque des personnes à mobilité réduite, par exemple des personnes en fauteuils roulants, ou encore par exemple des personnes avec des poussettes, souhaitent pénétrer dans le véhicule de transport.

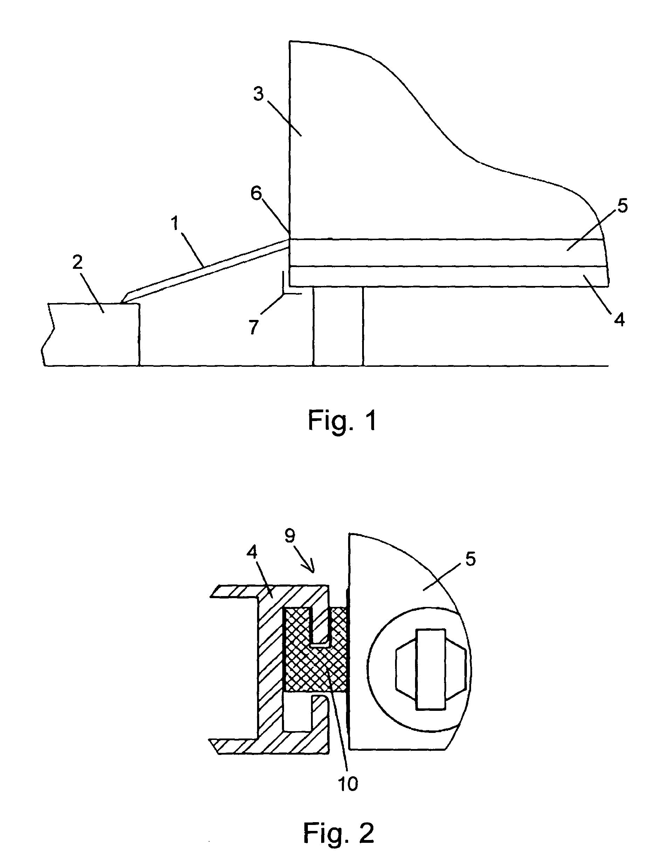

La figure 1 illustre la configuration déployée du panneau 1 mobile formant un plan incliné et une rampe d'accès entre le trottoir 2 et le véhicule de transport 3.

De manière connue le panneau 1 mobile se replie dans un caisson 4 fixé au châssis 5 du véhicule de transport. La figure représente schématiquement la rampe d'accès et ne montre pas les parties internes du caisson ainsi que l'articulation du panneau pour l'amener au contact du seuil 6 du véhicule.

Tel que cela est illustré sur la figure 1 la zone référencée 7 est celle sur laquelle un maximum d'impacts potentiels a été constaté au cours de l'emploi de ce type de rampe d'accès.

Selon l'invention le dispositif de sécurité placé sous le châssis 5 est **caractérisé en ce qu**'il présente des moyens de déplacement dudit caisson entre deux positions extrêmes, entre une position dite d'utilisation dans laquelle le bord du caisson est positionné à l'extrémité latérale du châssis et entre une position dite de sécurité dans laquelle le caisson est positionné en retrait par rapport au bord du véhicule. Dans la position en retrait le caisson est placé plus vers le centre du véhicule.

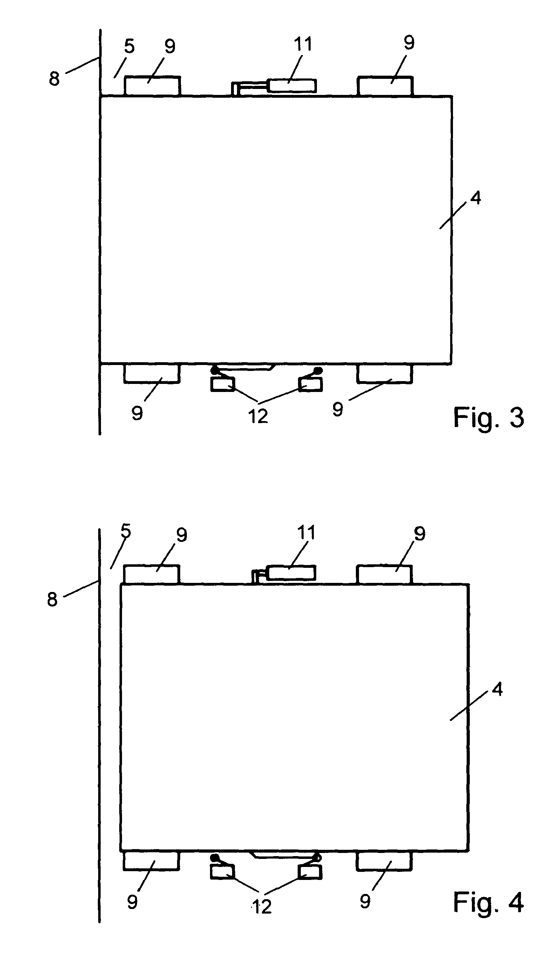

Ces deux positions extrêmes sont schématisées en vue de dessous sur les figures 3 et 4.

La figure 3 montre notamment le caisson 4 en position d'utilisation, c'est à dire avec son extrémité proche du trottoir, au niveau de la partie latérale 8 du châssis. Alors que la figure 4 illustre le retrait du caisson et l'éloignement du bord du véhicule, lequel retrait soustrait ledit caisson de la zone 7 à risque.

Afin d'effectuer ce déplacement le dispositif de sécurité selon l'invention comporte des moyens de guidage 9 du caisson en translation entre les deux positions extrêmes d'utilisation et de sécurité.

Les moyens de guidage 9 dimensionnés pour ne pas diminuer la capacité de charge initiale d'une rampe fixée sous le châssis peuvent être réalisés par l'usage de patins, rails, roulettes, glissières ou tout autre dispositif équivalent dont une partie est solidaire du caisson 4 et l'autre est solidaire du châssis 5 du véhicule.

La figure 2 illustre un dispositif de guidage 9 envisageable entre le caisson 4 et le châssis 5 comportant un patin en plastique 10 pour permettre le glissement du caisson entre les deux positions extrêmes.

Les figures 3 et 4 montrent le positionnement des organes de guidage autour du caisson, de préférence deuxde chaque côté de manière à ce que le poids et les contraintes sur le caisson soient régulièrement réparties.

Bien entendu il peut être imaginé différentes autres variantes que celle représentée sur la figure 2, par exemple avec des organes de guidage de type rails continus sur les deux côtés du caisson, lesquels moyens de guidage pouvant être lubrifiés ou non, contenir éventuellement des organes de roulement et être constitués de différents types de matériaux sans sortir du cadre de l'invention.

Ces organes de guidage peuvent être soit entièrement indépendants du caisson soit partiellement ou totalement intégrés à la structure du caisson.

Selon l'invention le dispositif de sécurité pour le caisson de rampe d'accès de véhicule comporte des moyens de verrouillage dans les deux positions extrêmes.

Des moyens de blocage peuvent être prévus pour immobiliser le caisson dans les positions extrêmes, cela de manière à éviter lors du déplacement du véhicule les allées et venues du caisson dans les organes de guidage, pour éviter des contraintes sur les moyens d'actionnement et surtout pour éviter tout déplacement intempestif du caisson en position d'utilisation, lorsque le panneau mobile est déployé et que des usagers sont sur celui-ci.

Ces moyens de verrouillage peuvent être éventuellement intégrés aux moyens d'actionnement dans le cas où ceux-ci ne sont pas réversibles, ou encore être indépendants et formés par des dispositifs de type serrure, doigt d'indexage, frein ou tout autre moyen équivalent.

Selon l'invention le déplacement entre les deux positions extrêmes s'effectue de manière automatisée sous l'action de moyens d'actionnement 11.

Sans que cela soit limitatif les moyens d'actionnement 11 peuvent être des vérins électriques ou pneumatiques, des systèmes de cames, bielles, excentriques, un dispositif de type pignon crémaillère ou vis écrou, qui permettent un déplacement automatisé du caisson entre les deux positions extrêmes.

Ces moyens d'actionnement sont bien évidemment reliés à un système de commande et à un dispositif de contrôle géré par le conducteur du véhicule, lequel moyen de commande pouvant être placé sur le tableau de bord du véhicule ou à proximité immédiate du chauffeur de manière à être actionné par celui-ci sans qu'il ait à se déplacer et en tout endroit du véhicule pour des raisons de sécurité et d'intervention des équipes de secours.

Outre les différents moyens précités le dispositif de sécurité pour le caisson de rampe d'accès de véhicule comporte des moyens de contrôle 12 de la position du caisson entre les deux positions extrêmes.

Ces moyens de contrôle de la position permettent de déterminer si le caisson est dans l'une ou l'autre des positions extrêmes et éventuellement si un déplacement est en cours.

Avantageusement ces moyens de contrôle, comme les moyens d'actionnement, peuvent être positionnés autour du caisson et reliés au châssis qui peut les supporter.

Ce type de positionnement de ces différents moyens, représenté sur les figures 3 et 4, n'est pas exclusif et il peut être prévu diverses autres localisations sans sortir du cadre de l'invention.

Le positionnement optimal du moyen d'actionnement retenu pour déplacer le caisson pourra être différent en fonction de son action mécanique la plus efficace et des contraintes techniques annexes, notamment des points les plus favorables pour le passage des câbles, par exemple.

Selon l'invention les moyens de contrôle 12 de la position du caisson sont associés à des alarmes, des afficheurs ou des indicateurs informant le conducteur du véhicule de la localisation du caisson.

Avantageusement selon l'invention les moyens de contrôle 12 de la position du caisson sont associés à des sécurités empêchant l'ouverture du caisson s'il n'est pas en position correcte d'utilisation, c'est à dire à l'extrémité latérale 8 du châssis 5.

Il serait en effet très dangereux pour des usagers ou des passants sur les trottoirs que la rampe d'accès se déploie en dehors du contrôle du conducteur et notamment lorsque le caisson n'est pas complètement en place dans sa position extrême d'utilisation verrouillée.

Avec les différentes garanties de sécurité énoncées il est cependant envisageable que le conducteur puisse déplacer le caisson lorsque le véhicule est en mouvement, notamment lorsqu'il est en approche d'un point de ramassage d'usagers, afin de gagner du temps, ce type de déplacement du caisson, sans que la sortie du panneau mobile soit possible, peut être prévu de manière optionnelle sur le tableau de commande de l'appareillage et sous l'entière responsabilité du conducteur.

Plusieurs variantes du dispositif de sécurité pour le caisson de la rampe d'accès sont possibles, il peut notamment être prévu des moyens très divers de guidage du caisson dans son déglacement, lesquels moyens de guidage pouvant être fabriqués avec des matériaux variés, notamment par exemple des pièces insensibles à la corrosion, en plastique, en téflon, en inox ou en matériaux traités pour être résistants aux intempéries, sans sortir du cadre de l'invention.

De même, comme cela a déjà été décrit, il peut être envisagé une large variété de moyens d'actionnement pour déplacer le caisson entre les deux positions extrêmes, sans sortir du cadre de l'invention.

Divers dispositifs annexes peuvent être associés aux moyens de blocage du caisson ou aux moyens de contrôle de la position, tels que des indicateurs lumineux ou sonores, des informations diffusées sur des afficheurs à cristaux liquides, des représentations graphiques du caisson sur un écran, etc... sans sortir du cadre de l'invention.

Bien entendu, l'invention n'est pas limitée aux modes de réalisation décrits et représentés à titre d'exemptes, mais elle comprend aussi tous les équivalents techniques ainsi que leurs combinaisons.

## Revendications

1. Dispositif de sécurité pour un caisson (4) de rampe d'accès de véhicule de transport placé sous châssis (5) contenant un panneau (1) mobile déployable, **caractérisé en ce qu'**il présente des moyens de déplacement dudit caisson (4) entre deux positions extrêmes, entre une position dite d'utilisation dans laquelle le bord du caisson (4) est positionné à l'extrémité latérale (8) du châssis (5) et entre une position dite de sécurité dans laquelle le caisson (4) est positionné en retrait par rapport au bord du véhicule (3).

2. Dispositif de sécurité pour un caisson (4) de rampe d'accès de véhicule selon la revendication 1 comportant des moyens de guidage (9) du caisson (4) dans son déplacement en translation entre les deux positions extrêmes d'utilisation et de sécurité.

3. Dispositif de sécurité pour un caisson (4) de rampe d'accès de véhicule selon la revendication 1 comportant des moyens de verrouillage du caisson (4) dans les deux positions extrêmes.

4. Dispositif de sécurité pour un caisson (4) de rampe d'accès de véhicule selon la revendication 1 dans lequel le déplacement entre les deux positions extrêmes s'effectue de manière automatisée sous l'action de moyens d'actionnement (11).

5. Dispositif de sécurité pour un caisson (4) de rampe d'accès de véhicule selon la revendication 4 dans lequel les moyens d'actionnement (11) sont des vérins électriques ou pneumatiques, des systèmes de cames, bielles, excentriques, un dispositif de type pignon crémaillère ou vis écrou, qui permettent le déplacement du caisson (4) entre les deux positions extrêmes.

6. Dispositif de sécurité pour un caisson (4) de rampe d'accès de véhicule selon la revendication 4 comportant des moyens de contrôle (12) de la position du caisson (4) entre les deux positions extrêmes.

7. Dispositif de sécurité pour un caisson (4) de rampe d'accès de véhicule selon la revendication 6 dans lequel les moyens de contrôle (12) de la position du caisson (4) sont associés à des alarmes, des afficheurs ou des indicateurs informant le conducteur du véhicule (3) de la localisation du caisson (4).

8. Dispositif de sécurité pour un caisson (4) de rampe d'accès de véhicule selon la revendication 6 dans lequel les moyens de contrôle (12) de la position du caisson (4) sont associés à des sécurités empêchant l'ouverture du caisson (4) s'il n'est pas en position correcte d'utilisation, c'est à dire à l'extrémité latérale (8) du châssis (5).
